# EUROPEAN PATENT SPECIFICATION

(11) **EP 2 206 263 B1**
(45) Date of publication and mention of the grant of the patent: **11.03.2015**
(21) Application number: 07861090.4
(22) Date of filing: 20.12.2007
(51) Int. Cl.: H04L 1/00, H04B 7/26, H04W 72/04, H04W 72/12

(54) **EXTENDED CELL RANGE IN WIRELESS COMMUNICATION NETWORKS**
ERWEITERTE ZELLENREICHWEITE IN DRAHTLOSEN KOMMUNIKATIONSNETZEN
PLAGE DE CELLULES ÉTENDUE DANS DES RÉSEAUX DE COMMUNICATION SANS FIL

(30) Priority: 06.11.2007 US 996195 P
(43) Date of publication of application: 14.07.2010
(73) Proprietor: Telefonaktiebolaget L M Ericsson (publ), 164 83 Stockholm (SE)
(72) Inventor: LAMM, Anders, S-431 38 Mölndal (SE); LINDGREN, Stefan, S-434 92 Vallda (SE); SJÖBERG, Sten, S-438 33 Landvetter (SE); TSAI, Shawn, San Diego, CA 92126 (US)
(74) Representative: Althoff, Fredrik
(86) International application number: PCT/SE2007/001133
(87) International publication number: WO 2009/061239

(56) References cited:
- EP-A1- 1 056 225
- WO-A1-2006/107835
- WO-A1-2007/059196
- WO-A2-2006/105005
- US-A1- 2006 057 978
- US-A1- 2007 127 406
- CMCC ,VODAFONE, CATT, RITT, ERICSSON, NOKIA, NOKIA SIEMENS NETWORKS, ZTE, HUAWEI: 'On Optimization of LTE TDD based on frame structure type 2' 3GPP TSG-RAN WG1 #50BIS, R1-074365, [Online] 08 October 2007, SHANGHAI, CHINA, XP050107881 Retrieved from the Internet: <URL:http://www.3gpp.org/ftp/tsg_ran/wg1_rl 1/ TSGR1_50b/Docs/R1-074365.zip>
- SAMSUNG: 'Latency Requirement for TDD mode' 3GPP TSG RAN WG1 MEETING #43, R1-051381, [Online] 07 November 2005 - 11 November 2005, SEOUL, KOREA, XP050100975 Retrieved from the Internet: <URL:http://www.3gpp.org/ftp/tsg_ran/WG1-RL 1/TSGR1_43/Docs/R1-051381.zip>

## Description

### TECHNICAL FIELD

The invention relates to communication between nodes in wireless communication networks. In particular, the invention relates to mobile nodes operating at the limit of a cell range in a wireless communication network.

### BACKGROUND OF THE INVENTION

It can be fairly assumed that mobility is a fundamental precondition in most wireless communication networks. Accordingly, most modern wireless communication systems comprise mobile terminals or similar mobile nodes. In particular, modern wireless communication networks typically comprise mobile terminals provided with the ability to operate within a certain distance from a base station or similar.

Well known examples of communication systems comprising mobile terminals are the Global System for Mobile communications (GSM), General Packet Radio Service (GPRS), Wideband Code Division Multiple Access (WCDMA), Universal Mobile Telecommunications System (UMTS), High Speed Packet Access (HSPA) and other cellular technologies or similar intended for a more or less global access. Other examples of systems having mobile terminals are the Wireless Local Access Networks (WLAN) or Worldwide Interoperability for Microwave Access (WiMAX) and other wireless communication networks or similar intended for more or less local or regional access.

Most modern wireless communication systems (e.g. as those exemplified above) are based on at least one mobile terminal and at least one base station or similar, wherein the terminal and the base station are arranged to operatively communicate with each other, as is well known to those skilled in the art.

Each such base station has a limited range - the cell range - within which a terminal can reliable connect and preferably communicate with the base station. However, the cell range is not a fixed figure. Rather, it depends on a number of factors, *e*.*g*. including:
- The type of signal in use (*i*.*e*. the underlying technology),
- The power transmitted by the base station,
- The interference from other transmitters,
- The antenna configuration, *e*.*g*. directional or omni-directional,
- The local geographical or regulatory factors and weather conditions.

Some technologies, such as GSM or similar may have fixed or substantially fixed maximum cell ranges imposed by technical limitations, whereas other technologies such as WCDMA or similar may have no specific fixed cell range. In either case, the cell range may in fact be more dependent on the ability of the typically low-powered mobile terminal (e.g. the personal cell phone or similar) to transmit back to the high power base station of the cell in question. In other words, the cell range does not necessarily depend on the properties of the typically high power base station, but equally or more importantly the cell range may depend on the ability of the typically low-power terminal to transmit back to the base station.

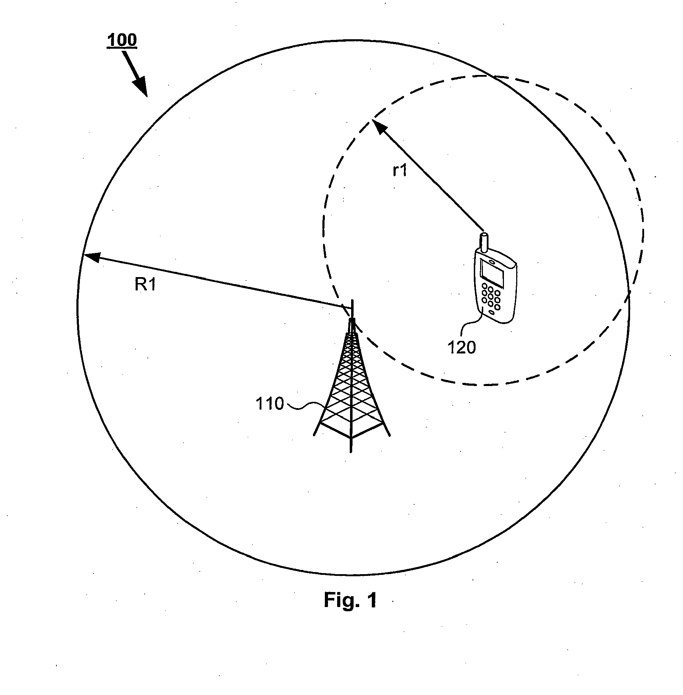

Figure 1 is a schematic illustration of an exemplifying wireless communication system 100 comprising a base station 110 and a mobile terminal 120. It is assumed that the base station 110 can reliably transmit to terminals located a distance R1 from the base station 110, *i*.*e*. the transmission range for the base station 110 is the distance R1. Similarly, it is assumed that the terminal 120 can reliably transmit back to a base station (*e*.*g*. the base station 110) located at a distance r1 from the terminal 120, *i.e.* the transmission range for the terminal 120 is the distance r1. As can be seen in Fig. 1 the terminal 120 is located well within the transmission range R1 of the base station 110. However, the terminal 120 is nevertheless at the cell range for the base station 110 and the terminal 120, since it is located at a distance from the base station 110 that is equal to or near to r1. In other words, in Fig. 1 the cell range is the distance r1 at which the base station 110 and the terminal 120 can reliably connect and preferably communicate with each other, *e*.*g*. reliably exchange information with each other.

Since the cell range is often limited by the transmission power of the terminal it is common to use the lowest order of modulation (*i*.*e*. the most robust modulation) and a minimum resource allocation, in terms of sub carriers or CDMA codes or similar, for the terminals near to the perimeter of the cell range, *i*.*e*. near to the cell edge. This minimum resource allocation focuses the transmission power from the terminal so as to increase the ability of the terminal to transmit back to the base station. However, the data payload that can be sent with a minimal resource allocation is small and the cell range is effectively limited by this for the terminal.

Document WO2007/059196 discloses a method for extending the cell range according to the prior art.

Hence, in view of the above there seems to be a need for improvements with respect to the cell range in wireless systems.

### SUMMARY OF THE INVENTION

The present invention provides a solution that eliminates or reduces at least one of the disadvantages discussed in the background above. Hence, the present invention provides at least one improvement with respect to the discussion above, which improvement is accomplished according to a first embodiment of the invention directed to a method for extending the cell range in a wireless communication system, which communication system comprises a communication network arranged to operatively communicate with at least one mobile terminal via an air interface having a cell range extending to a cell edge, and at least one mobile terminal arranged to operatively communicate with said communication network via said air interface.

The method comprises the steps of:
- obtaining information about the condition of an up-link signal from said at least one mobile terminal,
- determining whether said terminal is located at or near the cell edge, and
- extending the cell range by increasing the time for up-link transmission if the terminal is located at or near the cell edge.

A second embodiment of the invention, comprising the features of the first embodiment, is directed to a method comprising the steps of: obtaining information about the condition of said up-link signal, by obtaining the signal strength of the up-link signal received by said communication network, and determining whether said terminal (220, 490) is located at or near the cell edge, by determining if the signal strength is equal to or below a predetermined value.

A third embodiment of the invention, comprising the features of the first embodiment, is directed to a method comprising the steps of: obtaining information about the condition of said up-link signal, by obtaining the quality of the up-link signal received by said communication network, and determining whether said terminal is located at or near the cell edge, by determining if the signal quality fulfils a predetermined condition.

A fourth embodiment of the invention, comprising the features of the third embodiment, is directed to a method comprising the steps of: obtaining information about the condition of said up-link signal, by obtaining the number of errors in the up-link signal received by said communication network, and determining whether said terminal is located at or near the cell edge, by determining if the number of errors in the signal is equal to or above a predetermined value.

A fifth embodiment of the invention, comprising the features of the third embodiment, is directed to a method comprising the steps of: obtaining information about the condition of said up-link signal, by obtaining the number of failed transmissions of the up-link signal received by said communication network, and determining whether said terminal is located at or near the cell edge, by determining if the number of failed transmissions is equal to or above a predetermined value.

A sixth embodiment of the invention, comprising the features of the first embodiment, is directed to a method comprising the steps of: obtaining information about the condition of said up-link signal, by obtaining the distance between said terminal and a base station in said communication network, and determining whether said terminal is located at or near the cell edge, by determining if the distance is equal to or near a predetermined value.

A seventh embodiment of the invention, comprising the features of the first embodiment, is directed to a method comprising the steps of: extending the cell range by increasing the time for up-link transmission if the terminal is located at or near the cell edge, by increasing the up-link time and decreasing the down-link time in one or several frames communicated between said communication network and said mobile terminal via said air interface.

An eighth embodiment of the invention, comprising the features of the seventh embodiment, is directed to a method comprising the steps of: extending the cell range by a dynamic or semi dynamic increase of the time interval for up-link traffic.

A ninth embodiment of the invention, comprising the features of the first embodiment, is directed to a method comprising the steps of: extending the cell range by increasing the time for up-link transmission if the terminal is located at or near the cell edge, by up-link time allocations that are distributed over multiple frames communicated between said communication network and said mobile terminal via said air interface.

In addition, the present invention provides at least one improvement with respect to the discussion in the background above. The improvement is accomplished according to a tenth embodiment of the invention directed to a node arrangement arranged to be operative in a wireless communication network so as to operatively communicate with at least one mobile terminal via an air interface having a cell range extending to a cell edge. The node arrangement is arranged to; operatively obtain information about the condition of an up-link signal from said at least one mobile terminal, operatively determine whether said terminal is located at or near a cell edge; and to operatively extend the cell range by increasing the time for up-link transmission if the terminal is located at or near the cell edge.

An eleventh embodiment of the invention, comprising the features of the tenth embodiment, is directed to a node arrangement that is arranged to; operatively obtain information about the condition of said up-link signal, by being arranged to operatively obtain the signal strength of the up-link signal received by said communication network; and to operatively determine whether said terminal is located at or near the cell edge, by being arranged to operatively determine if the signal strength is equal to or below a predetermined value.

A twelfth embodiment of the invention, comprising the features of the tenth embodiment, is directed to a node arrangement that is arranged to; operatively obtain information about the condition of said up-link signal, by being arranged to operatively obtain the quality of the up-link signal received by said communication network; and to operatively determine whether said terminal is located at or near the cell edge, by being arranged to operatively determine if the signal quality fulfils a predetermined condition.

A thirteenth embodiment of the invention, comprising the features of the twelfth embodiment, is directed to a node arrangement that is arranged to; operatively obtain information about the condition of said up-link signal, by being arranged to operatively obtain the number of errors in the up-link signal received by said communication network; and to operatively determine whether said terminal is located at or near the cell edge, by being arranged to operatively determine if the number of errors in the signal is equal to or above a predetermined value.

A fourteenth embodiment of the invention, comprising the features of the twelfth embodiment, is directed to a node arrangement that is arranged to: operatively obtain information about the condition of said up-link signal, by being arranged to operatively obtain the number of failed transmissions of the up-link signal received by said communication network; and to operatively determine whether said terminal is located at or near the cell edge, by being arranged to operatively determine if the number of failed transmissions is equal to or above a predetermined value.

A fifteenth embodiment of the invention, comprising the features of the tenth embodiment, is directed to a node arrangement that is arranged to; operatively obtain information about the condition of said up-link signal, by being arranged to operatively obtain the distance between said terminal and a base station in said communication network; and to operatively determine whether said terminal is located at or near the cell edge, by being arranged to operatively determine if the distance is equal to or near a predetermined value.

A sixteenth embodiment of the invention, comprising the features of the tenth embodiment, is directed to a node arrangement that is arranged to: operatively extend the cell range by increase the time for up-link transmission if the terminal is located at or near the cell edge, by being arranged to operatively increase the up-link time and decrease the down-link time in one or several frames communicated between said communication network and said mobile terminal via said air interface.

A seventeenth embodiment of the invention, comprising the features of the sixteenth embodiment, is directed to a node arrangement that is arranged to operatively extend the cell range, by being operatively arranged to dynamically or semi dynamically increase the time interval for up-link traffic.

An eighteenth embodiment of the invention, comprising the features of the tenth embodiment, is directed to a node arrangement that is arranged to operatively extend the cell range by increase the time for up-link transmission if the terminal is located at or near the cell edge, by being arranged to operatively provide up-link time allocations that are distributed over multiple frames communicated between said communication network and said mobile terminal via said air interface.

Further advantages of the present invention and embodiments thereof will appear from the following detailed description of the invention.

It should be emphasized that the term "comprises/comprising" when used in this specification is taken to specify the presence of stated features, integers, steps or components, but does not preclude the presence or addition of one or more other features, integers, steps, components or groups thereof.

It should also be emphasised that the steps of the methods defined in the appended claims may, without departing from the present invention, be performed in another order than the order in which they appear in the claims.

### BRIEF DESCRIPTION OF THE DRAWINGS

- Fig. 1: is a schematic illustration of an exemplifying wireless communication system 100 comprising a base station 110 and a mobile terminal 120.
- Fig. 2: is a schematic illustration of an exemplifying wireless communication system 200 according to a first embodiment of the present invention.
- Fig. 3: is a schematic illustration showing six (6) exemplifying frames comprising down-link time slots and up-link time slots for the TDD communication between the base station 212 and the terminal(s) 220 in Fig. 2.
- Fig. 4: is a schematic illustration of an exemplifying wireless communication system 200 according to a second embodiment of the present invention.
- Fig. 5: is a schematic illustration of an embodiment of the invention showing six (6) exemplifying frames comprising down-link time slots and up-link time slots or similar for the TDD communication between the base station 212 and the terminal(s) 220 in Fig. 2 and/or the TDD communication between the base station 380, 480 and the terminal(s) 390, 490 respectively in Fig. 4.
- Fig. 6: is a schematic illustration of an alternative embodiment of the invention showing six (6) exemplifying frames comprising down-link time slots and up-link time slots or similar for a TDD communication between the base station 212 and the terminal(s) 220 in Fig. 2, and/or a TDD communication between at least one of the base stations 380, 480 and the corresponding terminal(s) 390, 490 in Fig. 4.
- Fig. 7: is a schematic flowchart illustrating the operation of an embodiment of the invention.

### DETAILED DESCRIPTION OF PREFERRED EMBODIMENTS

### CONFIGURATION OF PREFERRED EMBODIMENTS

### A First Exemplifying Communication System

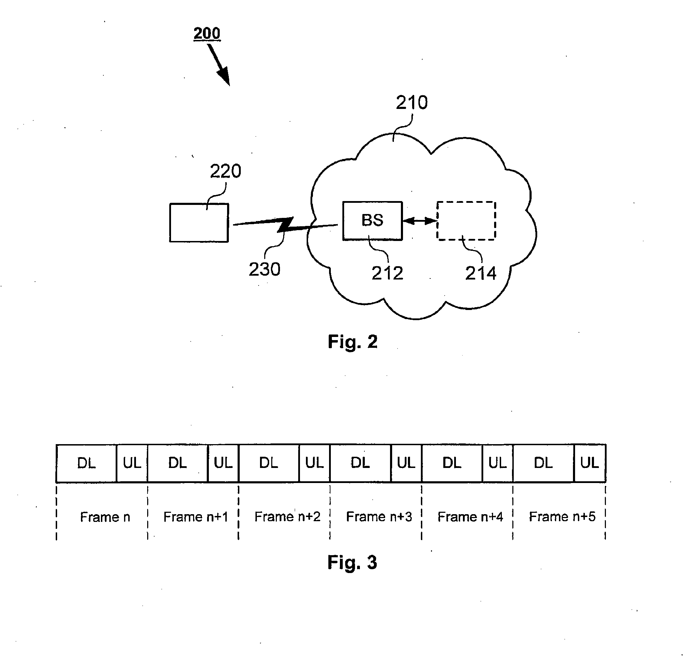

Figure 2 is a schematic illustration of an exemplifying wireless communication system 200 according to a first embodiment of the present invention. It is preferred that the wireless communication system 200 is a cellular or a non-cellular communication system intended for a more or less local or regional access as indicated above in the section "Background of the Invention", *e*.*g*. according to WiMAX technology as defined in the IEEE 802.16 standards, or according to HIPERMAN, iBurst or WiBro or similar. As can be seen in Fig. 2, the exemplifying communication system 200 comprises a communication network 210 and one or several mobile terminals 220.

The communication network 210 of the communication system 200 comprises at least a first node in the form of a base station 212 or similar. However, the communication network 210 may also comprise a second node or node arrangement 214 that is operatively connected to the base station 212 or a plurality of such base stations 212. As will be discussed later, the second node arrangement 214 may be arranged to operatively control the operation of the base station(s) 212, *e*.*g*. arranged to operatively control the character of the up-link and down-link communication preformed by the base station(s) 212 with respect to the terminal(s) 220.

The base station 212 of the communication system 200 is a wireless communications station arranged at a substantially fixed location and arranged to operatively communicate with the terminal 220 over an air interface 230. Base stations of this kind are well known *per se* to those skilled in the art (see *e.g.* the IEEE 802.11 or the IEEE 802.16 standards) and they need no detailed description as such. However, particular features of the base station 212 according to embodiments of the present invention will be further elaborated later.

The mobile terminal 220 of the communication system 200 is a wireless terminal that is arranged to operatively communicate with the base station 212 over the air interface 230 in the same or similar manner as indicated above for the base station 212. Terminals of this kind are well known *per se* to those skilled in the art (see *e.g.* the IEEE 802.11 or the IEEE 802.16 standards) and they need no detailed description as such. However, particular features of the terminal 220 according to embodiments of the present invention will be further elaborated later.

It is preferred that the air interface 230 of the communication system 200 mentioned above uses Time Division Duplexing (TDD) or similar to create a duplex spectrum for the up-link and down-link between the base station 212 and the terminal 220.

As is well known, TDD is achieved in time rather than by frequency as in Frequency Division Duplexing, FDD. Hence, according to the TDD approach, the up-link and the down-link operate on the same frequency, but they are switched very rapidly: one moment the channel is sending the up-link signal, the next moment the channel is sending the down-link signal. Because this switching is performed very rapidly, it does appear that one channel is acting as both an up-link and a down-link at the same time. This is called Time Division Duplex, or TDD. One may say that TDD requires a guard time instead of a guard frequency band between transmit and receive streams.

TDD has a strong advantage when the asymmetry of the up-link and down-link data speed is variable. As the amount of up-link data increases, more bandwidth can dynamically be allocated to the up-link and as it shrinks the bandwidth can be taken away. Another advantage is that the up-link and down-link radio paths are likely to be very similar, at least in the case of a slow moving terminal. This means that techniques such as beam forming work well with TDD systems.

In most wireless communication systems (at least most data communication systems) the traffic is typically down-link centric, *i*.*e*. the amount of traffic in the down-link direction from the base station 212 to the terminal 220 is normally exceeding the amount of traffic in the up-link direction from the terminal 220 to the base station 212. This is illustrated in Fig. 3 showing a schematic illustration of six (6) exemplifying frames. Each exemplifying frame comprises a down-link time transmission period and an up-link time transmission period for the TDD communication between the base station 212 and the terminal 220 or terminals 220 via the air interface 230 in Fig. 2.

As indicated above, TDD technique is applicable to embodiments of the air interface used to communicate between a base station and a mobile terminal according to embodiments of the present invention.

In this connection it is preferred that the down-link and up-link communication between the base station 212 and the terminal 220 according to embodiments of the present invention is controlled by means of messages transmitted from the base station 212 to the terminal 220, which messages *e*.*g*. comprise the down-link and up-link ratio within the frame or frames to be transmitted between the base station 212 and the terminal 220. It is well known that such information can be transmitted in so-called down-link map and up-link maps *e*.*g*. providing the terminal with information about the down-link and up-link ratio and/or the number of down-link and up-link time allocations within the frame or frames to be transmitted between a base station and a terminal.

### A Second Exemplifying Communication System

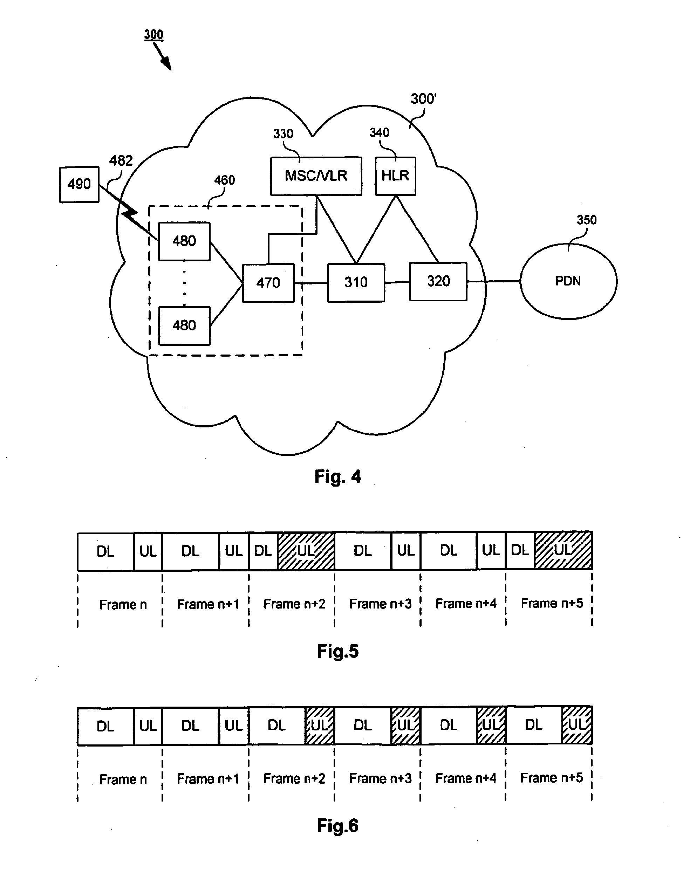

The attention is now directed to a second exemplifying communication system 300 according to an embodiment of the invention as illustrated in Fig. 4.

The communication system 300 is intended for a more or less global access and it is based on an air interface that uses Time Division Duplexing (TDD) as previously described. As can be seen in Fig. 4, the communication system 300 comprises a communication network 300' and one or several terminals 480.

In fact, Fig. 4 is a schematic overview of an exemplifying general wireless telecommunication system in which various network elements and interfaces are shown. The structure and operation of a general wireless telecommunication system is well known *per se* to those skilled in the art and it needs no detailed explanation. However, a brief overview of the exemplifying wireless telecommunication system in Fig. 4 is given below.

The main Core Network (CN) elements in the network 300' are a Serving Node 310, a Gateway Node 320. There may also be a Mobile Switching Center (MSC) and location registers, *e*.*g*. such as a Visitor Location Register (VLR) 330 and a Home Location Register (HLR) 340. The Serving Node 310 and the Gateway Node 320 may be connected directly to each other and/or through intermediate routers and switches to form parts of the CN. In addition, it should be emphasized that the Serving Node 310 and the Gateway Node 320 may be fully or partly arranged in the same physical unit and/or as spatially separated equipments, *e*.*g*. equipments arranged at different geographical locations. The CN is used as the interface between a Radio Access Network (RAN) - as will be elaborated below - and various external data networks such as e.g. a Public Data Network (PDN) 350 as shown in Fig. 4. The Internet is a well known and common example of a PDN.

At one end of the CN the Gateway Node 320 operates as an interface between the CN and the various PDNs. At another end of the CN the Serving Node 310 operates as an interface between various RANs.

Typically the Serving Node 310 interfaces with one or several Radio Network Systems 460 or similar, which in turn comprises one or several Radio Network Controllers 470 or similar at one end being connected to the Serving Node 310 and at the other end connected to a plurality of Base Stations 480. Each Base Station 480 is in turn serving one or several Mobile Equipments 490 or similar via a TDD-based air interface 482 as will be further explained later.

The Serving Node 310 may maintain signaling connections with the HLR 340 and the MSC/VLR 330 or similar. The Gateway Node 320 may maintain signaling connections with the HLR 340 or similar. The Radio Network Controller 470 may maintain signaling with the MSC/VLR 330.

The CN can *e*.*g*. use the Internet Protocol (IP) as the protocol in the network layer. The protocols used in the transport layer can *e*.*g*. be the Internet User Datagram Protocol (UDP) for IP services and the Internet Transmission Control Protocol (TCP) for services which require delivery guarantee such as X.25 services or similar.

The TDD technique described above is equally applicable to the air interface 482 of the communication network 300' in Fig. 4 used to communicate between the base station 480 and the mobile terminal 490.

In this connection it is preferred that the down-link and up-link communication between the base station 480 and the mobile terminal 490 is controlled by means of messages transmitted from the base station 480 to the terminal 490. It is further preferred that these messages comprise down-link maps and up-link maps *e*.*g*. providing information to the terminal 480 about the down-link and up-link ratio and/or the number of down-link and up-link allocations within the frame or frames to be transmitted between the base station 480 and the terminal 490.

### OPERATION OF PREFERRED EMBODIMENTS

Figure 5 is a schematic illustration of an embodiment of the invention showing six (6) exemplifying frames comprising a down-link time transmission period and a up-link time transmission period or similar for a TDD communication between the base station 212 and the terminal(s) 220 in Fig. 2, or a TDD communication between at least one 480 and the corresponding terminal(s) 490 in Fig. 4.

In Fig. 5 it is assumed that at least one mobile terminal 220, 490 is located at or near the cell edge - *i.e.* at or near the perimeter of the cell range, c.f. the above discussion referring to Fig. 1. It is further assumed that the terminal 220, 490 transmits its data (*e*.*g*. packets) back to the base station 212, 480 with the maximum or nearly maximum power that is available for up-link transmission. It is also preferred that the terminal 212, 490 uses the lowest order of modulation (*i*.*e*. the most robust modulation) and a minimum resource allocation in terms of sub carriers or CDMA codes or similar. This resource allocation focuses the transmission power from the terminal 220, 490 so as to increase the ability of the terminal 220, 490 to transmit back to the base station 212, 480 in question.

Given the above, the embodiment of the present invention illustrated in Fig. 5 is based on a dynamic or semi dynamic time interval for down-link and up-link traffic, *i*.*e*. a dynamic or semi dynamic transmission / reception time ratio, or in other words a dynamic or semi dynamic up-link and down-link time ratio. In other words, the time interval for up-link transmissions can be dynamically increased or decreased, *e*.*g*. depending on the signal strength and/or the signal quality or similar. For example, if the signal strength and/or the signal quality or similar are low the time interval for up-link transmissions can be increased. Conversely, if the signal strength and/or the signal quality or similar are high the time interval for up-link transmissions can be decreased.

As can be seen in Fig. 5, a dynamic or semi dynamic up-link and down-link time ratio has been accomplished by an increase of the up-link time and a corresponding decrease of the down-link time in one or several frames. As indicated above, it is preferred that the increase and corresponding decrease is dynamic or semi dynamic. More particularly, in the example shown in Fig. 5 the up-link time is increased in Frame n+2 and in Frame n+5. In this manner the up-link resources in the form of total up-link time can be increased for the terminals 220, 390, 490 that are located at or near the cell edge (*e*.*g*. increased the number of up-link time slots or similar). In this manner, more resources (*e*.*g*. total transmitted energy) can be allocated to the up-link transmissions for terminals 220, 390, 490 at or near the cell edge, since the terminals 220, 390, 490 can transmit their data (*e*.*g*. packets) back to the base station 212, 380,480 during a longer period of time. In turn, this increases the ability of such terminals 220, 390, 490 to transmit back to the base station 212, 380, 480 resulting in an increased (extended) cell range.

In other words, by introducing a preferably periodic pattern of frames with a preferably dynamic or semi dynamic up-link and down-link ratio a scheduler or similar can grant extended transmission time in frames with longer up-link periods to those mobile terminals that are located at or near the cell edge. The resources allocation can be minimized but with longer time period. This increases the cell range and lowers the fragmentation overhead. The exemplifying frame structure in Fig. 5 presents a semi dynamic down-link up-link ratio wherein every third frame has more up-link bandwidth. Naturally, some other frame periodicity may be used to allocate more up-link bandwidth to mobile terminals 220, 390, 490 at or near the cell edge.

The scheduler mentioned above - granting extended bandwidth in frames with longer up-link periods to mobile terminals at or near the cell edge - may *e*.*g*. be a node in the communication network 210, 300', *e*.*g*. a node or node arrangement such as the base station 212, 380, 480 and/or the node 214, BSC 370, RNC 470 that controls the base station 212, 380, 480 as previously described above with reference to Fig. 2 and 4. In deed, the scheduler and/or the scheduler function may be distributed between both the base station and the node or nodes that control the base station.

As indicated earlier, it is preferred that the scheduler or similar provides the terminal or terminals 220, 390, 490 within the communication network 210, 300' respectively with information about the up-link and/or down-link time ratio or a representation thereof to be used for the frame or frames that will be transmitted between a base station and a terminal. It is even more preferred that the scheduler or similar utilises the well known down-link map and up-link map mechanism to provide the terminal or terminals 220, 390, 490 within the communication network 210, 300' respectively with information about the up-link and/or down-link time ratio to be used for the frame or frames.

At this instance it should be observed that the dynamic or semi dynamic up-link / down-link time ratio should preferably be synchronized with the neighbouring base stations, in case of one or several neighbouring base stations, *e*.*g*. as is the case in cellular communication network such as the communication network 300' in Fig. 4. This is preferred to avoid reception in one base station in one cell or similar during a transmission interval for other base station in neighbouring cells or similar. A synchronisation can e.g. be accomplished by dedicating a specified pattern as function of the frame number or similar. Such dedication may *e*.*g*. be determined by the node or node arrangement controlling the base stations, such as *e*.*g*. the node 214, a BSC 370 or a RNC 470 or a node or node arrangement in a higher hierarchy of the communication network in question.

Figure 6 is a schematic illustration of an alternative embodiment of the invention showing six (6) exemplifying frames comprising down-link transmission periods and up-link transmission periods or similar for a TDD communication between the base station 212 and the terminal(s) 220 in Fig. 2, or a TDD communication between at least one of the base stations 380, 480 and the corresponding terminal(s) 390, 490 in Fig. 4.

In Fig. 6, as previously described with reference to Fig. 5, it is assumed that at least one mobile terminal 220, 490 is located at or near the cell edge - *i.e.* at or near the perimeter of the cell range, c.f. the above discussion referring to Fig. 1.

Given the above, the embodiment of the present invention illustrated in Fig. 6 is based on up-link time allocations that are distributed as sub-frames over multiple ordinary up-link frames so that the total up-link time is increased. It is preferred that the sub-frames are received and combined into one logical unit for demodulation and decoding by the base station 212, 480 in question.

As can be seen in Fig. 6, this has been accomplished by distributing up-link time allocations over a plurality of the ordinary frames for one or several terminals 220, 490 located at or near the cell edge. It is preferred that the distribution is dynamic or semi dynamic. More particularly, in the example shown in Fig. 6 the up-link time is increased in that sub-frames comprising up-link traffic (*e*.*g*. data packets) from one or several terminals 220, 490 located at or near the cell edge have been distributed over Frame n+2 to Frame n+5.

As already indicated, it is preferred that the distributed up-link sub-frames for mobile terminals 220, 490 respectively are received and combined into one logical unit for demodulation and decoding by the base station 212, 480 in question. In this manner the up-link resources in the form of total up-link time can be increased for the terminals 220, 490 located at or near the cell edge (*e*.*g*. the total number of up-link time slots or similar can be increased). In other words, more resources (*e*.*g*. total transmitted energy) can be allocated to the up-link transmissions for terminals 220, 490 at or near the cell edge, since the terminals 220, 490 can transmit their data (*e*.*g*. packets) back to the base station 212, 480 during a longer period of time. In turn, this increases the ability of such terminals 220, 490 to transmit back to the base station 212, 480 resulting in an increased (extended) cell range.

In other words, by introducing a resource allocation distributed over several sub-frames comprising up-link traffic (*e*.*g*. data packets) from one or several terminals 220, 490 a scheduler or similar (*e*.*g*. a node or node arrangement such as the base station 212, 480 and/or the node 214, 470 that controls the base station 212, 480) can grant extended transmission time by distributing the resource allocations (sub-frames) over several ordinary frames to those mobile terminals 220, 490 that are located at or near the cell edge. The resources allocation can be minimized but with longer time period. This increases the cell range and lowers the fragmentation overhead.

As schematically illustrated in Fig. 6, it is preferred that the sub-frames are distributed over a burst of consecutive ordinary frames.

In the embodiment described above with respect to Fig. 6 it is preferred that the up-link / down-link time ratio in the frame structure is fixed or at least substantially fixed. This simplifies the synchronisation of the transmission / reception with neighbouring cells in the access network to avoid reception in one base station in one cell during a transmission interval for other base stations in neighbouring cells, c.f. the above discussion in the matter with reference to Fig. 5.

In addition, as also indicated earlier with reference to Fig. 5, it is preferred that a scheduler or similar - *e*.*g*. a node in the communication network 210, 300' such as a base station 212, 480, or a node or node arrangement 214, 470 that controls the base station 212, 480 - provides the terminal or terminals 220, 490 within the communication network 210, 300' respectively with information about the distribution of sub-frames or similar within the ordinary frames comprising up-link and/or down-link traffic that will be transmitted between a base station and a terminal. It is even more preferred that the scheduler or similar utilises the well known down-link map and up-link map mechanism to provide the terminal or terminals 220, 490 within the communication network 210, 300' respectively with information about the distribution of allocated sub-frames or similar within the ordinary frames.

More particularly, with respect the IEEE 802.16 standards it is preferred that the up-link sub-frame distribution/aggregation is implemented by introducing new extended Uplink Interval Usage Code dependent (UIUC-dependent) or UIUC2-dependent Information Element (IE) of the Up-Link Map IE (UL MAP IE) to indicate the number of physical layer TDD frames whose up-link sub-frames the scheduled terminal should treat logically as one encoded packet. If it is desired to use the current burst profile indicators (UIUC between 1 and 10) for the newly aggregated up-link formats, additional Type Length Value (TLV) values can be added to the, PHY-specific section of up-link Channel Descriptor (UCD). Both methods (new UIUC dependent IE:s or new TL-V in UCD) are strictly backward compatible with existing terminals.

The embodiments of the present invention described above increase the cell range, while maintaining an overall desired asymmetric transmission / reception ratio and a minimized fragmentation overhead. The maximum cell range is an important factor for initial deployment of a system with small number of base stations.

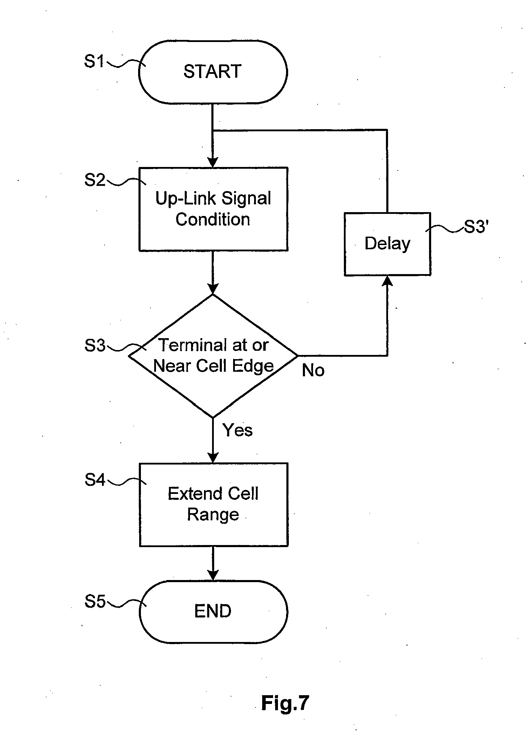

The attention is now directed to a schematic flowchart shown in Fig. 7 illustrating the operation of an exemplifying embodiment of the invention.

In a first step S1 it is preferred that a wireless communication system 200, 300 is activated so as to be operative and that at least one terminal 220, 490 of the communication system 200, 300 in question is within the cell range of at least one base station 212,480 comprised by a wireless communication network 210, 300' of the communication system 200, 300. It should be emphasised that the communication system must not necessarily be a cellular communication system 300. Embodiments of the invention are equally applicable to communication systems 200 comprising a single base station 212 or a plurality of base stations that are not arranged in a cellular manner.

In a second step S2 it is preferred that at least the condition of the up-link signal from said at least one terminal 220, 490 is determined. The condition of the up-link signal may *e*.*g*. be determined by the base station 212, 480 measuring the signal-strength for the transmission(s) received from the terminal 220, 490. Alternatively or additionally the condition may *e*.*g*. be determined by the base station 212, 480 or the terminal 220, 490 by measuring the bit-rate-error for signals transmitted between the base station and the terminal and/or by measuring the number of failed transmissions despite full power and focused resource allocation or similar. As is well understood by those skilled in the art, low signal strength and/or poor signal quality indicates a long distance between the base station 212, 480 and the terminal 220, 490, *i*.*e*. insufficient or nearly insufficient signal strength or signal quality or similar indicate that the terminal in question is at or near the cell edge.

Alternatively or additionally the distance between the base station 212, 480 and the terminal 220, 490 may *e*.*g*. be determined by the base station 212, 480 or the terminal 220, 490 by measuring the round trip time for signals transmitted and received between the base station and the terminal. Alternatively or additionally, as is well known, modern cellular communication networks 300' may be arranged to operatively know the location of the base stations480 therein and to determine the location of the mobile terminal 490 connected to the network 300', *e*.*g*. by means of triangulation using a plurality of base stations480. Alternatively or additionally, modern terminals490 may be provided with the well known satellite based Global Positioning System (GPS), whereby the terminal has access to its location. Here it is generally assumed that the distance between the base station and a terminal that is known to the terminal is communicated to the cellular communication networks 300', *i.e.* to a node or node arrangement therein.

From the above, it should be clear that the expression "the condition of the up-link signal" should be interpreted broadly so as to include a long geographic distance between the base station 212, 480 and the terminal 220, 490 as well as other situations wherein the signal is weak and/or the signal quality is poor or similar, *e*.*g*. when the signal is attenuated (*e*.*g*. by buildings or terrain etc) and/or disturbed (*e*.*g*. by other transmitters) etc.

In a third step S3 it is preferred to determine whether a specific terminal is at or near the cell edge of a base station 212, 480. Here it is preferred that the base station 212, 480 in question or some other node or node arrangement in the communication network 210, 330' is arranged to operatively perform the determination. For example, this can be accomplished by providing a node or nod arrangement in the communication network 210, 300' with information about the location and range of the base station 212, 480 in question, and by providing the node or node arrangement with the location or distance of the terminal 220, 490 in question as determined in step S2. As is clear to a person skilled in the art - having the benefit of this disclosure - this makes it is easy to determine whether the terminal 220, 490 is located at or near the cell edge. It should be emphasised that whether the specific terminal is at or near the cell edge can be alternatively or additionally determined by the up-link signal strength and/or the up-link signal quality as described above. As is well understood, low signal strength and/or low signal quality indicate a long distance.

The process proceeds to delay step 3' if there is no terminals 220, 490 at or near the cell edge and the process is stayed for a predetermined period of time before returning to the second step S2. The process is otherwise proceeding to a fourth step S4.

In a fourth step S4 it is preferred that the cell range is extended for the terminal and/or terminals 220, 490 that are at or near the cell edge as described above. In other words, according to the embodiment described above with reference to Fig. 5, it is preferred to extend the cell range by means of a dynamic or a semi dynamic increase of the time interval for down-link and up-link traffic. Alternatively, according to the embodiment described above with reference to Fig. 6, it is preferred to extend the cell range by means of up-link time allocations that are distributed over multiple ordinary frames so that the up-link time is increased.

The process may be terminated in a fifth step S5. However, the process described with reference to steps S1-S4 above may be repeated, e.g. repeated a predetermined number of times or repeated during a predetermined period of time, or repeated until it is terminated by the operator of the communication network 210, 300'.

The present invention has now been described with reference to exemplifying embodiments. However, the invention is not limited to the embodiments described herein. On the contrary, the full extent of the invention is only determined by the scope of the appended claims.

## Claims

1. A method for extending the cell range in a wireless communication system (200, 300), which communication system (200, 300) comprises a communication network (210, 300') arranged to operatively communicate with at least one mobile terminal (220, 490) via an air interface (230, 482) having a cell range extending to a cell edge, and at least one mobile terminal (220, 490) arranged to operatively communicate traffic in frames with said communication network (210, 300') via said air interface (230, 482), said method comprises the steps of:
- obtaining information about the condition of an up-link signal from said at least one mobile terminal (220, 490),
- determining whether said terminal (220, 490) is located at or near the cell edge, and
- extending the cell range by an increase of the time for up-link transmission and a corresponding decrease of the time for downlink transmission within said frames if the terminal is located at or near the cell edge.

2. The method according to claim 1, said method comprises the steps of:
- obtaining information about the condition of said up-link signal, by obtaining the signal strength of the up-link signal received by said communication network (210, 300'), and
- determining whether said terminal (220, 490) is located at or near the cell edge, by determining if the signal strength is equal to or below a predetermined value.

3. The method according to claim 1, said method comprises the steps of:
- obtaining information about the condition of said up-link signal, by obtaining the quality of the up-link signal received by said communication network (210, 300'), and
- determining whether said terminal (220, 490) is located at or near the cell edge, by determining if the signal quality fulfils a predetermined condition.

4. The method according to claim 3, said method comprises the steps of:
- obtaining information about the condition of said up-link signal, by obtaining the number of errors in the up-link signal received by said communication network (210, 300'), and
- determining whether said terminal (220, 490) is located at or near the cell edge, by determining if the number of errors in the signal is equal to or above a predetermined value.

5. The method according to claim 3, said method comprises the steps of:
- obtaining information about the condition of said up-link signal, by obtaining the number of failed transmissions of the up-link signal received by said communication network (210, 300'), and
- determining whether said terminal (220, 490) is located at or near the cell edge, by determining if the number of failed transmissions is equal to or above a predetermined value.

6. The method according to claim 1, said method comprises the steps of:
- obtaining information about the condition of said up-link signal, by obtaining the distance between said terminal (220, 490) and a base station (212, 480) in said communication network (210, 300'), and
- determining whether said terminal (220, 490) is located at or near the cell edge, by determining if the distance is equal to or near a predetermined value.

7. The method according to claim 1, said method comprises the steps of:
extending the cell range by a dynamic or semi dynamic increase of the time interval for up-link traffic.

8. A node arrangement (212, 214, 470, 480, 310) arranged to be operative in a wireless communication network (210, 300') so as to operatively communicate traffic in frames with at least one mobile terminal (220, 490) via an air interface (230, 482) having a cell range extending to a cell edge, wherein:
said node arrangement (212, 214, 470, 480, 310) is arranged to;
- operatively obtain information about the condition of an up-link signal from said at least one mobile terminal (220, 490),
- operatively determine whether said terminal (220, 490) is located at or near a cell edge, and
- operatively extend the cell range by an increase of the time for up-link transmission and a corresponding decrease of the time for downlink transmission within said frames if the terminal is located at or near the cell edge.

9. The node arrangement (212, 214, 470, 480, 310) according to claim 8, ***characterized in that***:
said node arrangement (212, 214, 470, 480, 310) is arranged to;
- operatively obtain information about the condition of said up-link signal, by being arranged to operatively obtain the signal strength of the up-link signal received by said communication network (210, 300'), and
- operatively determine whether said terminal (220, 490) is located at or near the cell edge, by being arranged to operatively determine if the signal strength is equal to or below a predetermined value.

10. The node arrangement (212, 214, 470, 480, 310) according to claim 8, ***characterized in that**:*
said node arrangement (212, 214, 470, 480, 310) is arranged to;
- operatively obtain information about the condition of said up-link signal, by being arranged to operatively obtain the quality of the up-link signal received by said communication network (210, 300'), and
- operatively determine whether said terminal (220, 490) is located at or near the cell edge, by being arranged to operatively determine if the signal quality fulfils a predetermined condition.

11. The node arrangement (212, 214, 470, 480, 310) according to claim 10, ***characterized in that**:*
said node arrangement (212, 214, 470, 480, 310) is arranged to;
- operatively obtain information about the condition of said up-link signal, by being arranged to operatively obtain the number of errors in the up-link signal received by said communication network (210, 300'), and
- operatively determine whether said terminal (220, 490) is located at or near the cell edge, by being arranged to operatively determine if the number of errors in the signal is equal to or above a predetermined value.

12. The node arrangement (212, 214, 470, 480, 310) according to claim 10, ***characterized in that**:*
said node arrangement (212, 214, 470, 480, 310) is arranged to;
- operatively obtain information about the condition of said up-link signal, by being arranged to operatively obtain the number of failed transmissions of the up-link signal received by said communication network (210, 300'), and
- operatively determine whether said terminal (220, 490) is located at or near the cell edge, by being arranged to operatively determine if the number of failed transmissions is equal to or above a predetermined value.

13. The node arrangement (212, 214, 470, 480, 310) according to claim 8, ***characterized in that***:
said node arrangement (212, 214, 470, 480, 310) is arranged to;
- operatively obtain information about the condition of said up-link signal, by being arranged to operatively obtain the distance between said terminal (220, 490) and a base station (212, 480) in said communication network (210, 300'), and
- operatively determine whether said terminal (220, 490) is located at or near the cell edge, by being arranged to operatively determine if the distance is equal to or near a predetermined value.

14. The node arrangement (212, 214, 470, 480, 310) according to claim 10, ***characterized in that**:* said node arrangement (212, 214, 470, 480, 310) is arranged to operatively extend the cell range, by being operatively arranged to dynamic or semi dynamic increase the time interval for up-link traffic.

## Patentansprüche

1. Verfahren zur Erweiterung der Zellenreichweite in einem drahtlosen Kommunikationssystem (200, 300), wobei dieses Kommunikationssystem (200, 300) umfasst: ein Kommunikationsnetz (210, 300'), das dafür eingerichtet ist, mit mindestens einem mobilen Endgerät (220, 490) über eine Luftschnittstelle (230, 482) mit einer Zellenreichweite, die sich bis zu einem Zellenrand erstreckt, betriebsmäßig zu kommunizieren, und mindestens ein mobiles Endgerät (220, 490), das dafür eingerichtet ist, mit dem Kommunikationsnetz (210, 300') über die Luftschnittstelle (230, 482) Verkehr in Rahmen betriebsmäßig abzuwickeln, wobei das Verfahren die folgenden Schritte umfasst:
- Beschaffen von Information über den Zustand des Uplink-Signals von dem mindestens einen mobilen Endgerät (220, 490),
- Bestimmen, ob das Endgerät (220, 490) sich an oder nahe dem Zellenrand befindet, und
- Erweitern der Zellenreichweite durch eine Erhöhung der Zeit für die Uplink-Übertragung und eine entsprechende Verringerung der Zeit für die Downlink-Übertragung innerhalb der Rahmen, wenn das Endgerät sich an oder nahe dem Zellenrand befindet.

2. Verfahren nach Anspruch 1, wobei das Verfahren die folgenden Schritte umfasst:
- Beschaffen von Information über den Zustand des Uplink-Signals, indem die Signalstärke des durch das Kommunikationsnetz (210, 300') empfangenen Uplink-Signals beschafft wird, und
- Bestimmen, ob das Endgerät (220, 490) sich an oder nahe dem Zellenrand befindet, indem bestimmt wird, ob die Signalstärke gleich oder kleiner als ein vorbestimmter Wert ist.

3. Verfahren nach Anspruch 1, wobei das Verfahren die folgenden Schritte umfasst:
- Beschaffen von Information über den Zustand des Uplink-Signals, indem die Qualität des durch das Kommunikationsnetz (210, 300') empfangenen Uplink-Signals beschafft wird, und
- Bestimmen, ob das Endgerät (220, 490) sich an oder nahe dem Zellenrand befindet, indem bestimmt wird, ob die Signalqualität eine vorbestimmte Bedingung erfüllt.

4. Verfahren nach Anspruch 3, wobei das Verfahren die folgenden Schritte umfasst:
- Beschaffen von Information über den Zustand des Uplink-Signals, indem die Anzahl von Fehlern in dem durch das Kommunikationsnetz (210, 300') empfangenen Uplink-Signal beschafft wird, und
- Bestimmen, ob das Endgerät (220, 490) sich an oder nahe dem Zellenrand befindet, indem bestimmt wird, ob die Anzahl von Fehlern im Signal gleich oder größer als ein vorbestimmter Wert ist.

5. Verfahren nach Anspruch 3, wobei das Verfahren die folgenden Schritte umfasst:
- Beschaffen von Information über den Zustand des Uplink-Signals, indem die Anzahl der erfolglosen Übertragungen des durch das Kommunikationsnetz (210, 300') empfangenen Uplink-Signals beschafft wird, und
- Bestimmen, ob das Endgerät (220, 490) sich an oder nahe dem Zellenrand befindet, indem bestimmt wird, ob die Anzahl der erfolglosen Übertragungen gleich oder größer als ein vorbestimmter Wert ist.

6. Verfahren nach Anspruch 1, wobei das Verfahren die folgenden Schritte umfasst:
- Beschaffen von Information über den Zustand des Uplink-Signals, indem die Entfernung zwischen dem Endgerät (220, 490) und einer Basisstation (212, 480) im Kommunikationsnetz (210, 300') beschafft wird, und
- Bestimmen, ob das Endgerät (220, 490) sich an oder nahe dem Zellenrand befindet, indem bestimmt wird, ob die Entfernung gleich oder nahe einem vorbestimmten Wert ist.

7. Verfahren nach Anspruch 1, wobei das Verfahren die folgenden Schritte umfasst:
Erweitern der Zellenreichweite durch eine dynamische oder halbdynamische Erhöhung des Zeitintervalls für den Uplink-Verkehr.

8. Knotenanordnung (212, 214, 470, 480, 310), die dafür eingerichtet ist, in einem drahtlosen Kommunikationsnetz (210, 300') betriebsfähig zu sein, um mit mindestens einem mobilen Endgerät (220, 490) über eine Luftschnittstelle (230, 482) mit einem Zellenreichweite, die sich bis zu einem Zellenrand erstreckt, Verkehr in Rahmen betriebsmäßig abzuwickeln, wobei:
die Knotenanordnung (212, 214, 470, 480, 310) dafür eingerichtet ist:
- Information über den Zustand eines Uplink-Signals von dem zumindest einem mobilen Endgerät (220, 490) betriebsmäßig zu beschaffen,
- betriebsmäßig zu bestimmen, ob das Endgerät (220, 490) sich an oder nahe einem Zellenrand befindet, und
- die Zellenreichweite durch eine Erhöhung der Zeit für die Uplink-Übertragung und eine entsprechende Verringerung der Zeit für die Downlink-Übertragung innerhalb der Rahmen betriebsmäßig zu erweitern, wenn das Endgerät sich an oder nahe dem Zellenrand befindet.

9. Knotenanordnung (212, 214, 470, 480, 310) nach Anspruch 8,
**dadurch gekennzeichnet, dass**:
die Knotenanordnung (212, 214, 470, 480, 310) dafür eingerichtet ist:
- Information über den Zustand des Uplink-Signals betriebsmäßig zu beschaffen, indem sie dafür eingerichtet ist, die Signalstärke des durch das Kommunikationsnetz (210, 300') empfangenen Uplink-Signals betriebsmäßig zu beschaffen, und
- betriebsmäßig zu bestimmen, ob das Endgerät (220, 490) sich an oder nahe dem Zellenrand befindet, indem sie dafür eingerichtet ist, betriebsmäßig zu bestimmen, ob die Signalstärke gleich oder kleiner als ein vorbestimmter Wert ist.

10. Knotenanordnung (212, 214, 470, 480, 310) nach Anspruch 8,
**dadurch gekennzeichnet, dass**:
die Knotenanordnung (212, 214, 470, 480, 310) dafür eingerichtet ist:
- Information über den Zustand des Uplink-Signals betriebsmäßig zu beschaffen, indem sie dafür eingerichtet ist, die Qualität des durch das Kommunikationsnetz (210, 300') empfangenen Uplink-Signals betriebsmäßig zu beschaffen, und
- betriebsmäßig zu bestimmen, ob das Endgerät (220, 490) sich an oder nahe dem Zellenrand befindet, indem sie dafür eingerichtet ist, betriebsmäßig zu bestimmen, ob die Signalqualität eine vorbestimmte Bedingung erfüllt.

11. Knotenanordnung (212, 214, 470, 480, 310) nach Anspruch 10,
**dadurch gekennzeichnet, dass**:
die Knotenanordnung (212, 214, 470, 480, 310) dafür eingerichtet ist:
- Information über den Zustand des Uplink-Signals betriebsmäßig zu beschaffen, indem sie dafür eingerichtet ist, die Anzahl von Fehlern in dem durch das Kommunikationsnetz (210, 300') empfangenen Uplink-Signal betriebsmäßig zu beschaffen, und
- betriebsmäßig zu bestimmen, ob das Endgerät (220, 490) sich an oder nahe dem Zellenrand befindet, indem sie dafür eingerichtet ist, betriebsmäßig zu bestimmen, ob die Anzahl von Fehlern im Signal gleich oder größer als ein vorbestimmter Wert ist.

12. Knotenanordnung (212, 214, 470, 480, 310) nach Anspruch 10,
**dadurch gekennzeichnet, dass**:
die Knotenanordnung (212, 214, 470, 480, 310) dafür eingerichtet ist:
- Information über den Zustand des Uplink-Signals betriebsmäßig zu beschaffen, indem sie dafür eingerichtet ist, die Anzahl der erfolglosen Übertragungen des durch das Kommunikationsnetz (210, 300') empfangenen Uplink-Signals betriebsmäßig zu beschaffen, und
- betriebsmäßig zu bestimmen, ob das Endgerät (220, 490) sich an oder nahe dem Zellenrand befindet, indem sie dafür eingerichtet ist, betriebsmäßig zu bestimmen, ob die Anzahl der erfolglosen Übertragungen gleich oder größer als ein vorbestimmter Wert ist.

13. Knotenanordnung (212, 214, 470, 480, 310) nach Anspruch 8,
**dadurch gekennzeichnet, dass**:
die Knotenanordnung (212, 0,214, 470, 480, 310) dafür eingerichtet ist:
- Information über den Zustand des Uplink-Signals betriebsmäßig zu beschaffen, indem sie dafür eingerichtet ist, die Entfernung zwischen dem Endgerät (220, 490) und einer Basisstation (212, 480) in dem Kommunikationsnetz (210, 300') betriebsmäßig zu beschaffen, und
- betriebsmäßig zu bestimmen, ob das Endgerät (220, 490) sich an oder nahe dem Zellenrand befindet, indem sie dafür eingerichtet ist, betriebsmäßig zu bestimmen, ob die Entfernung gleich oder nahe einem vorbestimmten Wert ist.

14. Knotenanordnung (212, 214, 470, 480, 310) nach Anspruch 10,
**dadurch gekennzeichnet, dass** die Knotenanordnung (212, 214, 470, 480, 310) dafür eingerichtet ist, die Zellenreichweite betriebsmäßig zu erweitern, indem sie betriebsmäßig dafür eingerichtet ist, das Zeitintervall für den Uplink-Verkehr dynamisch oder halbdynamisch zu erhöhen.

## Revendications

1. Procédé d'extension de la plage de cellules dans un système de communication sans fil (200, 300), le système de communication (200, 300) comportant un réseau de communication (210, 300') agencé de manière à communiquer de façon fonctionnelle avec au moins un terminal mobile (220, 490) par l'intermédiaire d'une interface radio (230, 482) présentant une plage de cellules s'étendant à une périphérie de cellule, et au moins un terminal mobile (220, 490) agencé de manière à communiquer, de façon fonctionnelle, du trafic dans des trames avec ledit réseau de communication (210, 300') par l'intermédiaire de ladite interface radio (230, 482), ledit procédé comportant les étapes ci-dessous consistant à :
- obtenir des informations connexes à l'état d'un signal de liaison montante à partir dudit au moins un terminal mobile (220, 490) ;
- déterminer si ledit terminal (220, 490) est situé au niveau ou à proximité de la périphérie de cellule ; et
- étendre la plage de cellules par une augmentation de la durée de transmission en liaison montante et une diminution correspondante de la durée de transmission en liaison descendante au sein desdites trames si le terminal est situé au niveau ou à proximité de la périphérie de cellule.

2. Procédé selon la revendication 1, dans lequel ledit procédé comprend les étapes ci-dessous consistant à :
- obtenir des informations connexes à l'état dudit signal de liaison montante, en obtenant l'intensité de signal du signal de liaison montante reçu par ledit réseau de communication (210, 300') ; et
- déterminer si ledit terminal (220, 490) est situé au niveau ou à proximité de la périphérie de cellule, en déterminant si l'intensité de signal est égale ou inférieure à une valeur prédéterminée.

3. Procédé selon la revendication 1, dans lequel ledit procédé comprend les étapes ci-dessous consistant à :
- obtenir des informations connexes à l'état dudit signal de liaison montante, en obtenant la qualité du signal de liaison montante reçu par ledit réseau de communication (210, 300') ; et
- déterminer si ledit terminal (220, 490) est situé au niveau ou à proximité de la périphérie de cellule, en déterminant si la qualité de signal satisfait une condition prédéterminée.

4. Procédé selon la revendication 3, dans lequel ledit procédé comprend les étapes ci-dessous consistant à :
- obtenir des informations connexes à l'état dudit signal de liaison montante, en obtenant le nombre d'erreurs dans le signal de liaison montante reçu par ledit réseau de communication (210, 300') ; et
- déterminer si ledit terminal (220, 490) est situé au niveau ou à proximité de la périphérie de cellule, en déterminant si le nombre d'erreurs dans le signal est égal ou supérieur à une valeur prédéterminée.

5. Procédé selon la revendication 3, dans lequel ledit procédé comprend les étapes ci-dessous consistant à :
- obtenir des informations connexes à l'état dudit signal de liaison montante, en obtenant le nombre d'échecs de transmission du signal de liaison montante reçu par ledit réseau de communication (210, 300') ; et
- déterminer si ledit terminal (220, 490) est situé au niveau ou à proximité de la périphérie de cellule, en déterminant si le nombre d'échecs de transmission est égal ou supérieur à une valeur prédéterminée.

6. Procédé selon la revendication 1, dans lequel ledit procédé comprend les étapes ci-dessous consistant à :
- obtenir des informations connexes à l'état dudit signal de liaison montante, en obtenant la distance entre ledit terminal (220, 490) et une station de base (212, 480) dans ledit réseau de communication (210, 300') ; et
- déterminer si ledit terminal (220, 490) est situé au niveau ou à proximité de la périphérie de cellule, en déterminant si la distance est égale à, ou proche d'une valeur prédéterminée.

7. Procédé selon la revendication 1, dans lequel ledit procédé comprend les étapes ci-dessous consistant à :
- étendre la plage de cellules par une augmentation dynamique ou semi-dynamique de l'intervalle de temps du trafic en liaison montante.

8. Agencement de noeud (212, 214, 470, 480, 310) agencé de manière à être fonctionnel dans un réseau de communication sans fil (210, 300') de manière à communiquer de façon fonctionnelle du trafic dans des trames avec au moins un terminal mobile (220, 490) par l'intermédiaire d'une interface radio (230, 482) présentant une plage de cellules s'étendant à une périphérie de cellule, dans lequel :
ledit agencement de noeud (212, 214, 470, 480, 310) est agencé de manière à :
- obtenir, de façon fonctionnelle, des informations connexes à l'état d'un signal de liaison montante à partir dudit au moins un terminal mobile (220, 490) ;
- déterminer, de façon fonctionnelle, si ledit terminal (220, 490) est situé au niveau ou à proximité d'une périphérie de cellule ; et
- étendre, de façon fonctionnelle, la plage de cellules, par une augmentation de la durée de transmission en liaison montante et une diminution correspondante de la durée de transmission en liaison descendante au sein desdites trames, si le terminal est situé au niveau ou à proximité de la périphérie de cellule.

9. Agencement de noeud (212, 214, 470, 480, 310) selon la revendication 8, **caractérisé en ce que** :
ledit agencement de noeud (212, 214, 470, 480, 310) est agencé de manière à :
- obtenir, de façon fonctionnelle, des informations connexes à l'état dudit signal de liaison montante, **en ce qu'**il est agencé de manière à obtenir de façon fonctionnelle l'intensité de signal du signal de liaison montante reçu par ledit réseau de communication (210, 300') ; et
- déterminer, de façon fonctionnelle, si ledit terminal (220, 490) est situé au niveau ou à proximité de la périphérie de cellule, **en ce qu'**il est agencé de manière à déterminer de façon fonctionnelle si l'intensité de signal est égale ou inférieure à une valeur prédéterminée.

10. Agencement de noeud (212, 214, 470, 480, 310) selon la revendication 8, **caractérisé en ce que** :
ledit agencement de noeud (212, 214, 470, 480, 310) est agencé de manière à :
- obtenir, de façon fonctionnelle, des informations connexes à l'état dudit signal de liaison montante, **en ce qu'**il est agencé de manière à obtenir de façon fonctionnelle la qualité du signal de liaison montante reçu par ledit réseau de communication (210, 300') ; et
- déterminer, de façon fonctionnelle, si ledit terminal (220, 490) est situé au niveau ou à proximité de la périphérie de cellule, **en ce qu'**il est agencé de manière à déterminer de façon fonctionnelle si la qualité de signal satisfait une condition prédéterminée.

11. Agencement de noeud (212, 214, 470, 480, 310) selon la revendication 10, **caractérisé en ce que** :
ledit agencement de noeud (212, 214, 470, 480, 310) est agencé de manière à :
- obtenir, de façon fonctionnelle, des informations connexes à l'état dudit signal de liaison montante, **en ce qu'**il est agencé de manière à obtenir de façon fonctionnelle le nombre d'erreurs dans le signal de liaison montante reçu par ledit réseau de communication (210, 300') ; et
- déterminer, de façon fonctionnelle, si ledit terminal (220, 490) est situé au niveau ou à proximité de la périphérie de cellule, **en ce qu'**il est agencé de manière à déterminer de façon fonctionnelle si le nombre d'erreurs dans le signal est égal ou supérieur à une valeur prédéterminée.

12. Agencement de noeud (212, 214, 470, 480, 310) selon la revendication 10, **caractérisé en ce que** :
ledit agencement de noeud (212, 214, 470, 480, 310) est agencé de manière à :
- obtenir, de façon fonctionnelle, des informations connexes à l'état dudit signal de liaison montante, **en ce qu'**il est agencé de manière à obtenir de façon fonctionnelle le nombre d'échecs de transmission du signal de liaison montante reçu par ledit réseau de communication (210, 300') ; et
- déterminer, de façon fonctionnelle, si ledit terminal (220, 490) est situé au niveau ou à proximité de la périphérie de cellule, **en ce qu'**il est agencé de manière à déterminer de façon fonctionnelle si le nombre d'échecs de transmission est égal ou supérieur à une valeur prédéterminée.

13. Agencement de noeud (212, 214, 470, 480, 310) selon la revendication 8, **caractérisé en ce que** :
ledit agencement de noeud (212, 214, 470, 480, 310) est agencé de manière à :
- obtenir, de façon fonctionnelle, des informations connexes à l'état dudit signal de liaison montante, **en ce qu'**il est agencé de manière à obtenir de façon fonctionnelle la distance entre ledit terminal (220, 490) et une station de base (212, 480) dans ledit réseau de communication (210, 300') ; et
- déterminer, de façon fonctionnelle, si ledit terminal (220, 490) est situé au niveau ou à proximité de la périphérie de cellule, **en ce qu'**il est agencé de manière à déterminer de façon fonctionnelle si la distance est égale à, ou proche d'une valeur prédéterminée.

14. Agencement de noeud (212, 214, 470, 480, 310) selon la revendication 10, **caractérisé en ce que** : ledit agencement de noeud (212, 214, 470, 480, 310) est agencé de manière à étendre de façon fonctionnelle la plage de cellules, **en ce qu'**il est agencé de façon fonctionnelle de manière à mettre en oeuvre une augmentation dynamique ou semi-dynamique de l'intervalle de temps du trafic en liaison montante.
